# EUROPÄISCHE PATENTSCHRIFT

(11) **EP 3 278 914 B1**
(45) Veröffentlichungstag und Bekanntmachung des Hinweises auf die Patenterteilung: **27.03.2019**
(21) Anmeldenummer: 17174815.5
(22) Anmeldetag: 07.06.2017
(51) Int. Cl.: B23D 21/08

(54) **STÜTZDORNHALTER FÜR EINEN ROHRABSCHNEIDER**
SUPPORT PIN HOLDER FOR A PIPE CUTTER
SUPPORT DE MANDRIN POUR COUPE-TUBE

(30) Priorität: 16.06.2016 DE 102016111049
(43) Veröffentlichungstag der Anmeldung: 07.02.2018
(73) Patentinhaber: Bilz, Sonja Maria, 61130 Nidderau (DE)
(72) Erfinder: Bilz, Sonja Maria, 61130 Nidderau (DE)
(74) Vertreter: Farago-Schauer, Peter Andreas

(56) Entgegenhaltungen:
- DE-A1-102014 104 474
- DE-U1- 7 613 538
- DE-U1-202007 004 482

## Beschreibung

Die Erfindung betrifft einen Stützdornhalter für einen Rohrabschneider vom Typ mit einem annähernd C-förmigen Bügel, der an einem Ende Gegendruckrollen trägt und am anderen Ende mit einem länglichen Griff verbunden ist, der eine Zustelleinrichtung enthält, die ein Schneidrad trägt, wobei diese Bestandteile eine imaginäre Werkzeugebene definieren, durch die eine zwischen und achsparallel zu den Gegendruckrollen und dem Schneidrad verlaufende imaginäre Vertikalachse verläuft, entlang sich der ein zu schneidendes Rohr erstreckt. Die Werkzeugebene enthält die Schneidspitze des Schneidrades.

Ein Rohrabschneider, auch Rohrabschneider oder Rollenschneider genannt, ist ein Handwerkzeug zum Trennen von Metallrohren, das zum Beispiel bei Wasser- und Heizungsinstallationen verwendet wird. Es besteht aus einem das Rohr umgreifenden Träger, an dem ein Paar Stützrollen und ein diesen gegenüberliegendes Schneidrad gelagert sind, wobei der Abstand zwischen den Stützrollen und dem Schneidrad mittels einer Gewindespindel einstellbar ist.

Um ein Rohr zu trennen, wird es in das geöffnete Werkzeug eingelegt, und das Schneidrad wird gegen das Rohr gepresst. Dreht man jetzt den Rohrabschneider radial um das Rohr, entsteht eine Kerbe, die tiefer wird, wenn man den Vorgang wiederholt, nachdem man das Schneidrad nachgestellt hat, bis das Rohr abgetrennt ist.

Ein Rohrabschneider von dem in Anspruch 1 genannten Typ ist z. B. aus der DE 7 613 538 U bekannt.

Will man mit einem solchen Rohrabschneider ein dünneres Rohr schneiden, sollte man zur Stabilisierung einen passenden Stützdorn hinein stecken, wobei auch eine Abquetschwirkung zwischen Stützdorn und Schneidrad entsteht. Um zu verhindern, dass der Stützdorn beim Hantieren mit dem Rohrabschneider wieder herausrutscht, könnte man ihn irgendwie fixieren, z. B. mit einem Klebeband, doch wäre dies eine recht improvisierte Lösung

Die DE 10 2014 104 474 A1 offenbart einen Rohrabschneider mit einem integrierten Stützdorn, der von selbst zwischen den Gegendruckrollen und dem Schneidrad liegt.

Die US 2 821 781 A offenbart einen Rohrabschneider mit einem U-förmigen Bügel, dessen einer Schenkel ein Schneidrad trägt und dessen anderer Schenkel einen in ein abzuschneidendes Rohr einführbaren drehbaren Dorn zur Schneidabstützung auf Höhe des Schneidrades trägt.

Die DE 20 2007 004 482 U1 offenbart einen zur Schneidabstützung in ein Rohr einführbaren zylindrischen Abstützkörper.

Der Erfindung liegt die Aufgabe zu Grunde, einen Stützdornhalter bereitzustellen, der ein praktisches und kostengünstig herstellbares Zubehör für einen vorhandenen handelsüblichen Rohrabschneider darstellt.

Diese Aufgabe wird durch einen Stützdornhalter mit den in Anspruch 1 angegebenen Merkmalen gelöst.

Vorteilhafte Weiterbildungen der Erfindung sind in den abhängigen Ansprüchen angegeben.

Gemäß der Erfindung enthält der Stützdornhalter einen Kopplungsabschnitt, der gestaltet ist, einen bogenförmigen Abschnitt des C-förmigen Bügels des Rohrabschneiders radial und axial zu umgreifen; einen äußeren länglichen Abschnitt, der sich von dem Kopplungsabschnitt aus achsparallel zu der Vertikalachse bis zu einem Endstück erstreckt; und einen inneren länglichen Abschnitt, der sich von dem Endstück aus entlang der Vertikalachse zurück bis ungefähr in die Werkzeugebene erstreckt und der dafür eingerichtet ist, an seinem freien Ende einen Stützdorn drehbar zu tragen, das heißt, zu lagern, oder einen drehbaren Stützdorn wie z. B. einen Stützdorn mit einem stationären Kern und einem um den Kern drehbaren Mantel zu tragen.

Zum Gebrauch wird der Stützdornhalter mit seinem Kopplungsabschnitt auf den Rohrabschneider aufgesetzt, wobei der Rohrabschneider geöffnet ist oder geöffnet wird, indem das Schneidrad mittels der Zustelleinrichtung, üblicherweise einer Spindel, genügend weit von den Gegendruckrollen weg bewegt wird. Danach wird ein zu trennendes Rohr so weit wie gewünscht in die Öffnung des Rohrabschneiders und auf den Stützdorn geschoben und dann auf die bekannte Weise geschnitten. Dazu muss das Rohr nicht unbedingt eingespannt werden, wodurch es verformt oder zerkratzt werden könnte, und auch nicht der Rohrabschneider, sondern der Rohrabschneider ist freihändig bedienbar, wobei eine Hand den Rohrabschneider hält und die andere das abzuschneidende Rohr hält und dreht.

Auch muss man bei der Arbeit nicht erst nach einem passenden Stützdorn suchen, und außerdem bildet der Stützdornhalter eine Führung für das Rohr, die es erlaubt, auch sehr kurze Rohrstücke abschneiden oder ein Rohr um ein sehr kleines Stück zu kürzen.

Obwohl der innere längliche Abschnitt oder zumindest der Stützdorn in die Öffnung des Rohrabschneiders hinein ragen muss, gelingt das Aufsetzen des Stützdornhalters, wenn er zunächst in einem gegenüber dem Rohrabschneider verdrehten Zustand aufgesetzt wird, in dem der Stützdorn die Öffnung des C-förmigen Bügels passiert, während er sich in der Ebene der Gegendruckrollen und dem Schneidrad befindet, und dann so gedreht wird, dass der Kopplungsabschnitt über den bogenförmigen Abschnitt des C-förmigen Bügels rutscht. Dazu macht man den Winkel, über den sich der montierte Kopplungsabschnitt auf dem bogenförmigen Abschnitt des C-förmigen Bügels erstreckt, ungefähr ebenso groß oder kleiner wie den Öffnungswinkel des Rohrabschneiders, d. h. den Winkelabstand zwischen den Enden der C-Form.

Daher können nicht nur der Kopplungsabschnitt und der äußere längliche Abschnitt, sondern auch der innere längliche Abschnitt aus einem einzigen Stück Material bestehen, insbesondere Kunststoff, aus dem der Stützdornhalter kostengünstig mittels Spritzguss oder in Kleinserie mittels 3D-Druck hergestellt werden kann. Der Stützdornhalter wird im Gebrauch mechanisch wenig beansprucht, so dass die Festigkeit von gebräuchlichen Hartkunststoffen ausreicht, doch könnte er auch aus einem Metall wie z. B. Aluminium hergestellt werden.

Alternativ kann der innere längliche Abschnitt ein separates Teil sein, das z. B. mittels einer Schraube oder eines integrierten Schnapp- oder Bajonettverschlusses am Ende des äußeren länglichen Abschnitts befestigt wird. In diesem Fall wäre das Endstück als ein Teil des äußeren länglichen Abschnitts anzusehen, doch könnte das Endstück alternativ ein Teil des inneren länglichen Abschnitts sein, und in diesem Fall könnte der innere längliche Abschnitt vom Ende des äußeren länglichen Abschnitts her in den äußeren länglichen Abschnitt einführbar sein und mittels eines integrierten Gewinde-, Schnapp- oder Bajonettverschlusses am äußeren länglichen Abschnitt befestigt werden.

Vorzugsweise ist der Kopplungsabschnitt gestaltet, den bogenförmigen Abschnitt des C-förmigen Bügels formschlüssig zu umgreifen. Der Kopplungsabschnitt könnte den bogenförmigen Abschnitt des C-förmigen Bügels in den beiden Axialrichtungen auch mit einem gewissen elastischen Kraftschluss umgreifen, so dass er von sich aus am Bügel festklemmt, doch genügt es, wenn der Kopplungsabschnitt lose auf dem C-förmigen Bügel sitzt, weil der innere längliche Abschnitt bzw. der Stützdorn verhindert, dass der Stützdornhalter nach seiner Anbringung am Rohrabschneider davon abfällt.

Vorzugsweise sind die beiden Teile des Kopplungsabschnitts, die den C-förmigen Bügel axial umgreifen, radial nach innen durch einen Teilkreis begrenzt, dessen Radius dem Außendurchmesser des weitesten Rohres entspricht, das mit einem Rohrabschneider schneidbar ist, an dem der Stützdornhalter angebracht ist.

Vorzugsweise hat der äußere längliche Abschnitt einen ungefähr teilkreisförmigen Querschnitt, wobei der Innenradius des Teilkreises dem Außendurchmesser des weitesten Rohres entspricht, das mit einem Rohrabschneider schneidbar ist, an dem der Stützdornhalter angebracht ist.

Vorzugsweise betragen die Radien der genannten Teilkreise genau die Hälfte des größten Rohrdurchmessers, so dass ein zu schneidendes Rohr an die Innenflächen des Stützdornhalters angelegt werden kann und dadurch automatisch genau vertikal zu der Werkzeugebene ausgerichtet wird.

Natürlich kann man mit dem Stützdornhalter nur Rohrstücke bis zu einer gewissen Länge von einem Rohr abschneiden. Ein praxistauglicher Kompromiss ist es, wenn der äußere längliche Abschnitt eine Länge hat, die ungefähr doppelt so groß ist wie der Außendurchmesser des weitesten Rohres ist, das mit einem Rohrabschneider schneidbar ist, an dem der Stützdornhalter angebracht ist.

Zwecks Materialeinsparung kann der innere längliche Abschnitt einen sternförmigen Querschnitt haben, vorzugsweise mit drei gleich langen Streben oder "Strahlen", wobei aber auch mehr Streben vorhanden sein können, z. B. vier oder fünf. Die radial äußeren Enden der Streben liegen äquidistant in einem imaginären Hohlzylinder, dessen Aussendurchmesser kleiner als der Innendurchmesser des am wenigsten weiten Rohres ist, das mit einem Rohrabschneider schneidbar ist, an dem der Stützdornhalter angebracht ist. Alternativ könnte der innere längliche Abschnitt aber auch ein Massivzylinder oder Hohlzylinder mit einem entsprechenden Außendurchmesser sein.

Vorzugsweise besitzt der innere längliche Abschnitt einen Endteil, der sich über die Werkzeugebene hinaus erstreckt und an dem die Streben partiell radial verkürzt sind und an einem axial und radial äußersten Ende als Widerhaken ausgebildet sind. Dabei wird die partielle radiale Verkürzung der Streben wird bemessen, dass ein ringförmiger Stützdorn in Form eines kurzen Rohrstücks axial auf den Endteil aufschiebbar ist und sich dort frei drehen kann, wobei die Widerhaken zuerst federnd nachgeben und dann durch Zurückfedern verhindern, dass sich der Stützdorn im Gebrauch vom Endteil löst.

In einer alternativen Ausführungsform erstreckt sich der innere längliche Abschnitt nicht über die Werkzeugebene hinaus, sondern endet ein Stück davor, z. B. ungefähr dort, wo der Kopplungsabschnitt in den äußeren länglichen Abschnitt übergeht. In diesem Fall würde man als Stützdorn nicht ein Rohrstück verwenden, das sich direkt auf dem inneren länglichen Abschnitt dreht, sondern z. B. ein zylindrisches Teil, das lose an das Ende des inneren länglichen Abschnitts geschraubt wird, damit es sich drehen kann, oder ein Teil, das auf einer Basis drehbar ist, die an das freie Ende des inneren länglichen Abschnitts geschraubt wird, wobei auch die Möglichkeit bestünde, ein Kugellager für leichtgängige Drehbarkeit vorzusehen.

In einer Weiterbildung kann der äußere längliche Abschnitt mit einer Längenskala versehen sein, zum Beispiel angeformten oder aufgedruckten Millimeter- und Zentimeterstrichen, so dass der Anwender sofort sieht, wie weit er ein Rohr eingeführt hat und wieviel er in dieser Stellung davon abschneiden würde.

Der erfindungsgemäße Rohrabschneider eignet sich besonders zum Schneiden von relativ dünnwandigen Rohren mit Wandstärken von weniger als einem Millimeter und Innendurchmessern von 30, 35 oder 40 Millimetern.

Es folgt eine Beschreibung von Ausführungsbeispielen anhand der Zeichnungen. Darin zeigen:
- Fig. 1: verschiedene Ansichten eines Stützdornhalters für einen Rohrabschneider;
- Fig. 2: verschiedene Ansichten des Stützdornhalters von Fig. 1, an einem Rohrabschneider montiert; und
- Fig. 3: Ansichten einer Variante des Stützdornhalters von Fig. 1 und 2.

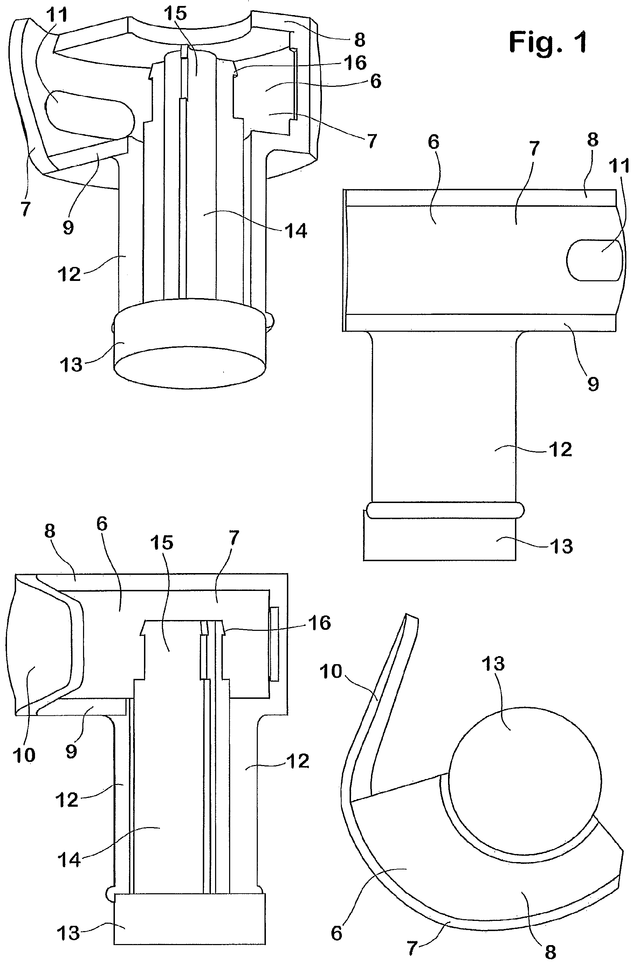

Fig. 1 zeigt ein erstes Ausführungsbeispiel für einen Stützdornhalter, und zwar links oben perspektivisch, rechts darunter in einer Seitenansicht, links unten in einem partiellen Querschnitt und rechts unten in einer Stirnansicht von einem Endstück her, wobei in den beiden oberen Ansichten darstellungshalber ein Fortsatz des Stützdornhalters abgeschnitten ist.

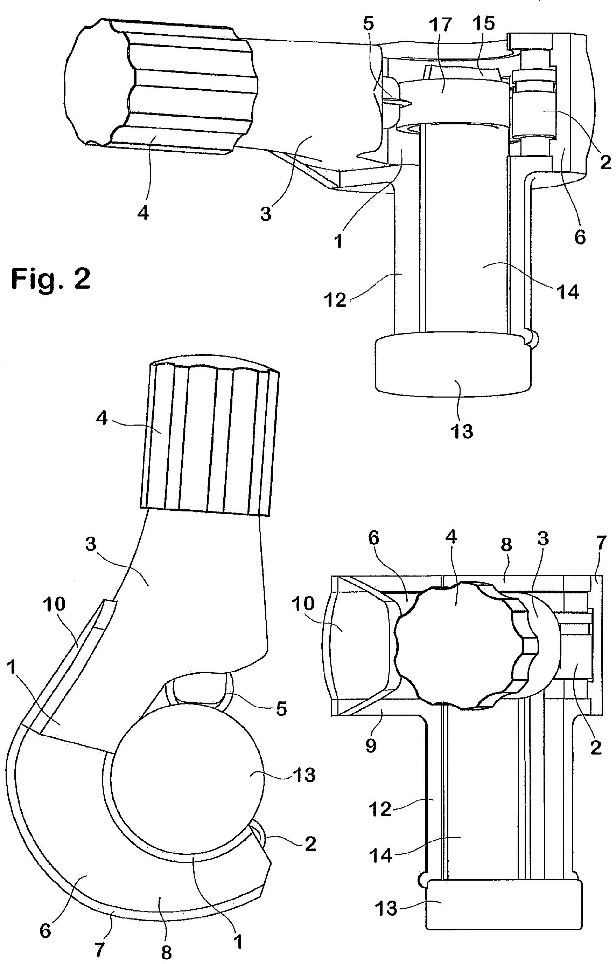

Fig. 2 zeigt den Stützdornhalter von Fig. 1 in einem Zustand, in dem er an einem handelsüblichen Rohrabschneider montiert ist, und zwar rechts oben perspektivisch, links unten in einer Stirnansicht von einem Endstück her und rechts unten in einer Seitenansicht.

Wie aus Fig. 2 ersichtlich, enthält der Rohrabschneider einen annähernd C-förmigen Bügel 1 (zum Teil durch den Stützdornhalter verdeckt), der an einem Ende mehrere Gegendruckrollen 2 trägt und am anderen Ende in einen länglichen Griff 3 übergeht, an dem sich ein Drehknopf 4 befindet, mit dem über eine innere Gewindespindel ein Schneidrad 5 in Richtung auf die Gegendruckrollen 2 oder davon weg zugestellt wird.

Der C-förmige Bügel 1 und die übrigen vorgenannten Teile des Rohrabschneiders erstrecken sich in einer hier als Werkzeugebene bezeichneten imaginären Ebene, die von einer dazu vertikalen imaginären Achse geschnitten wird, die irgendwo zwischen den Gegendruckrollen 2 und dem Schneidrad 5 und parallel zu deren Drehachsen verläuft.

Wie aus Fig. 1 und 2 ersichtlich, enthält der Stützdornhalter einen Kopplungsabschnitt 6, der gestaltet ist, einen bogenförmigen Abschnitt des C-förmigen Bügels 1 des Rohrabschneiders radial und axial formschlüssig zu umgreifen. Das heißt, der Kopplungsabschnitt 6 ist ein schalenförmiges Teil mit einer an die Außenfläche des C-förmigen Bügels 1 angepassten Innenfläche.

Der Kopplungsabschnitt 6 enthält einen radialen gebogenen Abschnitt 7, der ähnlich wie ein Abschnitt eines Fasses in zwei Dimensionen gebogen ist, und zwei axiale Abschnitte 8 und 9, welche jeweils die Form eines Winkelabschnitts einer Scheibe haben.

Der radiale gebogene Abschnitt 7 besitzt außerdem einen mehr oder weniger geraden tangentialen Fortsatz 10, der nur in den beiden unteren Ansichten vollständig eingezeichnet ist und mit dem sich der Stützdornhalter am Rücken des Rohrabschneiders abstützen kann, nämlich an einem geraden Übergang vom bogenförmigen Abschnitt des C-förmigen Bügels 1 zum Griff 3.

Der radiale gebogene Abschnitt 7 enthält außerdem einen Ausschnitt 11, der optional vorgesehen kann, falls der Rohrabschneider einen integrierten Rohrentgrater aufweist, der teleskopisch aus seinem Rücken ausgeschoben kann, so dass der Rohrentgrater auch bei montiertem Stützdornhalter verwendet werden kann

An den einen axialen Abschnitt 9 des Kopplungsabschnitts 8 ist ein äußerer länglicher Abschnitt 12 mit teilkreisförmigem Querschnitt angeformt, der sich von dem Kopplungsabschnitt 8 aus achsparallel zu der oben genannten Vertikalachse bis zu einem Endstück 13 erstreckt.

Von dem Endstück 13 aus erstreckt sich entlang der Vertikalachse zurück zum Kopplungsabschnitt 6 sowie etwas über die Werkzeugebene hinaus ein innerer länglicher Abschnitt 14, der einen sternförmigen Querschnitt mit drei gleich langen Streben oder "Strahlen" hat, deren radial äußere Enden äquidistant in einem imaginären Hohlzylinder liegen, dessen Aussendurchmesser kleiner als der Innendurchmesser des am wenigsten weiten Rohres ist, das unter Verwendung des Stützdornhalters mit dem Rohrabschneider geschnitten werden kann.

Der innere längliche Abschnitt 14 besitzt einen Endteil 15, der sich zwischen den Gegendruckrollen 2 und dem Schneidrad 5 erstreckt, wenn der Stützdornhalter an dem Rohrabschneider angebracht ist. Im Bereich des Endteils 15 sind die Streben des inneren länglichen Abschnitts 14 partiell radial verkürzt und sind an ihren axial und radial äußersten Enden als Widerhaken 16 ausgebildet.

Der Stützdornhalter besteht vorzugsweise aus Kunststoff, und aufgrund von dessen Materialeigenschaften lassen es die Widerhaken 16 zu, einen nur in Fig. 2 oben eingezeichneten Stützdorn 17 in Form eines kurzen Rohrstücks aus rostfreiem Stahl auf den Endteil 15 aufzuschieben, wonach die Widerhaken 16 zurückfedern und den Stützdorn 17 auf dem Endteil 15 zurückhalten. Der Stützdorn 17 und die partiellen radialen Verkürzungen der Streben im Endteils 15 sind so bemessen, dass sich der Stützdorn 17 in der Folge frei auf dem Endteil 15 drehen kann.

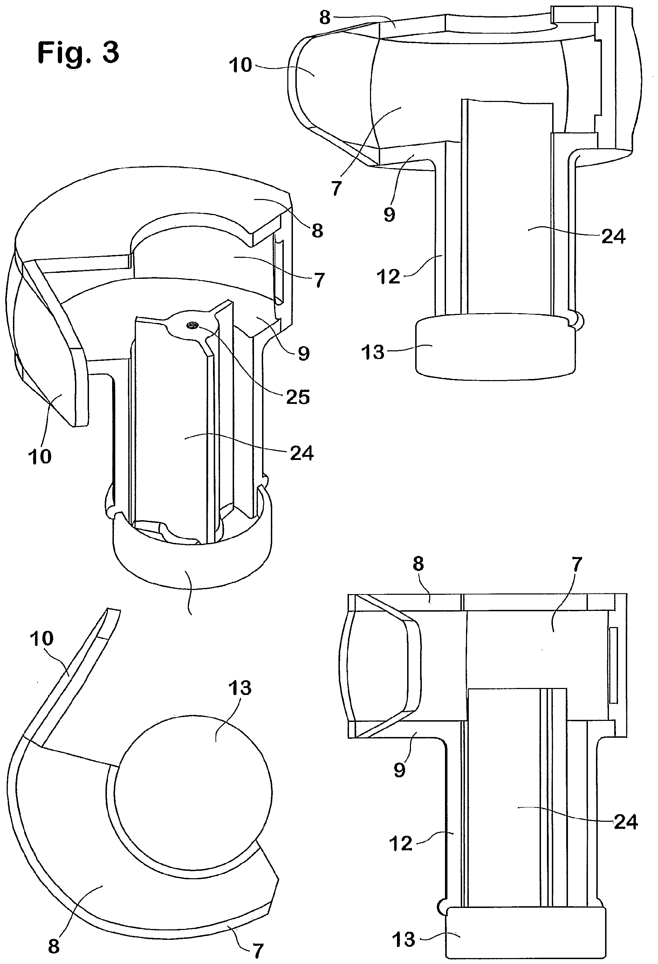

Fig. 3 zeigt eine Variante des Stützdornhalters von Fig. 1 und 2, und zwar rechts oben und links darunter perspektivisch, links unten in einer Stirnansicht von einem Endstück her und rechts unten in einem partiellen Querschnitt.

Der in Fig. 3 gezeigte Stützdornhalter unterscheidet sich von dem in Fig. 1 und 2 gezeigten Stützdornhalter im Wesentlichen nur dadurch, dass er statt des inneren länglichen Abschnitts 14 einen um den Endteil 15 kürzeren inneren länglichen Abschnitt 24 aufweist, der in seinem freien Ende eine zentrale Bohrung 25 enthält, in die eine Schraube geschraubt werden kann, mit der ein nicht gezeigter passender Stützdorn an das axiale Ende des inneren länglichen Abschnitts 24 geschraubt werden kann, so dass der Stützdorn in der Werkzeugebene liegt und sich dort frei drehen kann, falls er nicht in sich drehbar ist.

## Patentansprüche

1. Stützdornhalter für einen Rohrabschneider vom Typ mit einem annähernd C-förmigen Bügel (1), der an einem Ende Gegendruckrollen (2) trägt und am anderen Ende mit einem länglichen Griff (3) verbunden ist, der eine Zustelleinrichtung enthält, die ein Schneidrad (5) trägt, wobei diese Bestandteile eine Werkzeugebene definieren, durch die eine zwischen und achsparallel zu den Gegendruckrollen (2) und dem Schneidrad (5) verlaufende Vertikalachse verläuft und wobei die Werkzeugebene die Schneidspitze des Schneidrades enthält,
**dadurch gekennzeichnet, dass** der Stützdornhalter folgendes aufweist:
a) einen Kopplungsabschnitt (6), der gestaltet ist, einen bogenförmigen Abschnitt des C-förmigen Bügels (1) radial und axial zu umgreifen;
b) einen äußeren länglichen Abschnitt (12), der sich von dem Kopplungsabschnitt (6) aus achsparallel zu der Vertikalachse bis zu einem Endstück (13) erstreckt; und
c) einen inneren länglichen Abschnitt (14; 24), der sich von dem Endstück (13) aus entlang der Vertikalachse zurück bis ungefähr in die Werkzeugebene erstreckt und der dafür eingerichtet ist, einen Stützdorn (17) drehbar zu tragen oder einen drehbaren Stützdorn zu tragen.

2. Stützdornhalter nach Anspruch 1, **dadurch gekennzeichnet, dass** zumindest der Kopplungsabschnitt (6) und der äußere längliche Abschnitt (12) und vorzugsweise auch der innere längliche Abschnitt (14; 24) aus einem Stück Material bestehen, insbesondere Kunststoff.

3. Stützdornhalter nach Anspruch 1 oder 2, **dadurch gekennzeichnet, dass** der Kopplungsabschnitt (6) gestaltet ist, den bogenförmigen Abschnitt des C-förmigen Bügels (1) formschlüssig zu umgreifen.

4. Stützdornhalter nach einem der vorhergehenden Ansprüche, **dadurch gekennzeichnet, dass** die den C-förmigen Bügel (1) axial umgreifenden Teile (8, 9) des Kopplungsabschnitts (6) radial nach innen durch einen Teilkreis begrenzt sind, dessen Radius dem Außendurchmesser des weitesten Rohres entspricht, das mit einem Rohrabschneider schneidbar ist, an dem der Stützdornhalter angebracht ist.

5. Stützdornhalter nach einem der vorhergehenden Ansprüche, **dadurch gekennzeichnet, dass** der äußere längliche Abschnitt (12) einen ungefähr teilkreisförmigen Querschnitt hat, wobei der Innenradius des Teilkreises dem Außendurchmesser des weitesten Rohres entspricht, das mit einem Rohrabschneider schneidbar ist, an dem der Stützdornhalter angebracht ist.

6. Stützdornhalter nach einem der vorhergehenden Ansprüche, **dadurch gekennzeichnet, dass** der äußere längliche Abschnitt (14; 24) eine Länge hat, die ungefähr doppelt so groß ist wie der Außendurchmesser des weitesten Rohres, das mit einem Rohrabschneider schneidbar ist, an dem der Stützdornhalter angebracht ist.

7. Stützdornhalter nach einem der vorhergehenden Ansprüche, **dadurch gekennzeichnet, dass** der Stützdorn (17) in Form eines kurzen Rohrstücks, vorzugsweise aus rostfreiem Stahl ausgebildet ist, der drehbar in einer Aussparung des inneren länglichen Abschnitts (14) getragen ist.

8. Stützdornhalter nach einem der vorhergehenden Ansprüche 1 bis 6, **dadurch gekennzeichnet, dass** der Stutzdorn am einen freien Ende des inneren länglichen Abschnitts (24) derart drehbar getragen ist, dass der Stützdorn in der Werkzeugebene liegt und sich dort frei drehen kann.

9. Stützdornhalter nach einem der vorhergehenden Ansprüche, **dadurch gekennzeichnet, dass** der innere längliche Abschnitt (14; 24) einen sternförmigen Querschnitt hat, vorzugsweise mit drei gleich langen Streben, wobei die radial äußeren Enden der Streben äquidistant in einem imaginären Hohlzylinder liegen, dessen Aussendurchmesser kleiner als der Innendurchmesser des am wenigsten weiten Rohres ist, das mit einem Rohrabschneider schneidbar ist, an dem der Stützdornhalter angebracht ist.

10. Stützdornhalter nach Anspruch 9, **dadurch gekennzeichnet, dass** der innere längliche Abschnitt (14) einen Endteil (15) aufweist, der sich über die Werkzeugebene hinaus erstreckt und an dem die Streben partiell radial verkürzt sind und an einem axial und radial äußersten Ende als Widerhaken (16) ausgebildet sind.

11. Stützdornhalter nach einem der vorhergehenden Ansprüche zur Verwendung beim Schneiden von relativ dünnwandigen Rohren mit Wandstärken von weniger als einem Millimeter.

## Claims

1. Support pin holder for a pipe cutter of the type having a nearly C-shaped hoop (1) which bears counterpressure rollers (2) at one end and is connected to a longitudinal handle (3) at the other end, containing a feeding unit which bears a cutting wheel (5); where these components define a tool plane through which a vertical axis passes which is defined between and axially parallel to the counterpressure rollers (2) and the cutting wheel (5); and where the tool plane contains the cutting point of the cutting wheel;
**characterized in that** the support pin holder further has:
a)a coupling portion (6) designed to radially and axially encompass an arc-shaped portion of the C-shaped hoop (1);
b) an outer longitudinal portion (12) extending axially parallel to the vertical axis from the coupling portion (6) down to an end portion (13); and
c) an inner longitudinal portion (14; 24) which extends from the end portion (13) back up to approximately the tool plane along the vertical axis and which is adapted to rotatably support a support pin (17) or to support a rotatable support pin.

2. Support pin holder according to Claim 1, **characterized in that** at least the coupling portion (6) and the outer longitudinal portion (12) and preferably also the inner longitudinal portion (14; 24) consist of one piece of material, in particular plastic.

3. Support pin holder according to Claim 1 or 2, **characterized in that** the coupling portion (6) is designed to encompass the arc-shaped portion of the C-shaped hoop (1) with positive engagement.

4. Support pin holder according to one of the preceding Claims, **characterized in that** the parts (8, 9) of the coupling portion (6) which axially encompass the C-shaped hoop (1) are limited radially inward by a graduated circle whose radius corresponds to the outer diameter of the widest pipe which can be cut with a pipe cutter to which the support pin holder is attached.

5. Support pin holder according to one of the preceding Claims, **characterized in that** the outer longitudinal portion (12) has a cross-section approximately shaped like a graduated circle, where the inner radius of the graduated circle corresponds to the outer diameter of the widest pipe which can be cut with a pipe cutter to which the support pin holder is attached.

6. Support pin holder according to one of the preceding Claims, **characterized in that** the outer longitudinal portion (14; 24) has a length approximately twice as large as the outer diameter of the widest pipe which can be cut with a pipe cutter to which the support pin holder is attached.

7. Support pin holder according to one of the preceding Claims, **characterized in that** the support pin (17) is formed in the shape of a short piece of pipe, preferably made of stainless steel, which is borne rotatably in a recess of the longitudinal inner portion (14).

8. Support pin holder according to one of the preceding Claims 1 through 6, **characterized in that** the support pin is borne rotatably at a free end of the longitudinal inner portion (24) such that the support pin is located on the tool plane and can freely rotate there.

9. Support pin holder according to one of the preceding Claims, **characterized in that** the longitudinal inner portion (14; 24) has a star-shaped cross-section, preferably with three struts of equal length, where the ends of the struts which are radially on the outside are positioned at equal distances in an imaginary hollow cylinder, whose outer diameter is smaller than the inner diameter of the narrowest pipe which can be cut with a pipe cutter to which the support pin holder is attached.

10. Support pin holder according to Claim 9, **characterized in that** the longitudinal inner portion (14) has an end portion (15) which extends beyond the tool plane and on which the struts are partially shortened in the radial direction and are formed as barbs (16) at an outer end in the axial and radial direction.

11. Support pin holder according to one of the above Claims to be used for cutting relatively thin-walled pipes with wall thicknesses of less than one millimeter.

## Revendications

1. Porte-mandrin de support pour un coupe-tubes du type avec un étrier à peu près en forme de C (1), qui porte à une extrémité des galets de contre-pression (2) et est relié à l'autre extrémité à une poignée longitudinale (3), qui contient un système d'alimentation réglage, qui porte un couteau circulaire (5), ces composants définissant un plan d'outil à travers lequel passe un axe vertical passant entre les galets de contre-pression (2) et parallèlement à l'axe de ceux-ci et le couteau circulaire (5) et le plan d'outil contenant la pointe de coupe du couteau circulaire,
**caractérisé en ce que** le porte-mandrin de support comporte les éléments suivants :
a) Une section d'accouplement (6), qui est structurée pour entourer radialement et axialement une section en forme d'arc de l'étrier en forme de C (1),
b) une section longitudinale extérieure (12), qui s'étend de la section d'accouplement (6) parallèlement à l'axe par rapport à l'axe vertical jusqu'à un embout (13), et
c) une section longitudinale intérieure (14,24), qui s'étend de l'embout (13) en retour le long de l'axe vertical jusqu'à à peu près dans le plan d'outil et qui est agencée pour porter pouvant tourner un mandrin de support (17) ou un mandrin de support pouvant tourner.

2. Porte-mandrin de support selon la revendication 1, **caractérisé en ce qu'**au moins la section d'accouplement (6) et la section longitudinale extérieure (12) et de préférence également la section longitudinale intérieure (14,24) sont composées d'un matériau en une seule pièce, notamment de matière plastique.

3. Porte-mandrin de support selon la revendication 1 ou 2, **caractérisé en ce que** la section d'accouplement (6) est structurée pour entourer par conformité de forme la section en forme d'arc de l'étrier en forme de C (1).

4. Porte-mandrin de support selon l'une quelconque des revendications précédentes, **caractérisé en ce que** les parties (8,9) entourant axialement l'étrier en forme de C (1) de la section d'accouplement (6) sont radialement limitées vers l'intérieur par une partie circulaire, dont le rayon correspond au diamètre extérieur du tube le plus large, qui peut être coupé avec un coupe-tubes sur lequel le porte-mandrin de support est monté.

5. Porte-mandrin de support selon l'une quelconque des revendications précédentes, **caractérisé en ce que** la section longitudinale extérieure (12) possède une section transversale à peu près partiellement circulaire, le rayon intérieur de la partie circulaire correspondant au diamètre extérieur du tube le plus large, qui peut être coupé avec un coupe-tubes sur lequel le porte-mandrin de support est monté.

6. Porte-mandrin de support selon l'une quelconque des revendications précédentes, **caractérisé en ce que** la section longitudinale extérieure (14,24) possède une longueur qui est à peu près le double en taille du diamètre extérieur du tube le plus large, qui peut être coupé avec un coupe-tubes sur lequel le porte-mandrin de support est monté.

7. Porte-mandrin de support selon l'une quelconque des revendications précédentes, **caractérisé en ce que** le mandrin de support (17) sous la forme d'un morceau de tube court, est constitué de préférence en acier inoxydable, qui est supporté pouvant tourner dans un évidement de la section longitudinale intérieure (14).

8. Porte-mandrin de support selon l'une quelconque des revendications précédentes 1 à 6, **caractérisé en ce que** le mandrin de support est supporté d'une manière tournante à une extrémité libre de la section longitudinale intérieure (24) de telle sorte que le mandrin de support se situe dans le plan d'outil et peut y tourner librement.

9. Porte-mandrin de support selon l'une quelconque des revendications précédentes, **caractérisé en ce que** la section longitudinale intérieure (14,24) possède une section transversale de forme étoilée, de préférence avec trois appuis de même longueur, les extrémités radialement extérieures des appuis se situant à équidistance dans un cylindre creux imaginaire, dont le diamètre extérieur est plus petit que le diamètre intérieur du tube le moins large, qui peut être coupé avec un coupe-tubes sur lequel le porte-mandrin de support est monté.

10. Porte-mandrin de support selon la revendication 9, **caractérisé en ce que** la section longitudinale intérieure (14) comporte une partie d'extrémité (15) qui s'étend au-delà sur le plan d'outil et sur laquelle les appuis sont en partie radialement raccourcis et sont constitués sous la forme d'ergots (16) à une extrémité axialement et radialement la plus extérieure.

11. Porte-mandrin de support selon l'une quelconque des revendications précédentes pour utilisation lors de la découpe de tubes à paroi relativement mince avec des épaisseurs de paroi inférieure à un millimètre.
